**Europäisches Patentamt**

**European Patent Office**

**Office européen des brevets**

(19)

(11) Veröffentlichungsnummer: **0 038 070**
A2

(12)

# EUROPÄISCHE PATENTANMELDUNG

(21) Anmeldenummer: **81102829.9**

(22) Anmeldetag: **13.04.81**

(51) Int. Cl.³: **H 04 N 1/10**, H 04 N 1/36

(30) Priorität: **15.04.80 DE 3014433**

(43) Veröffentlichungstag der Anmeldung: **21.10.81 Patentblatt 81/42**

(84) Benannte Vertragsstaaten: **CH FR GB IT LI NL**

(71) Anmelder: **SIEMENS AKTIENGESELLSCHAFT** Berlin und München, Postfach 22 02 61, **D-8000 München 22 (DE)**

(72) Erfinder: **Bauer, Paul, Ing, grad., Landshuter Strasse 107, D-8300 Ergolding (DE)**

(54) **Anordnung zum Abtasten von mit graphischen Mustern versehenen Vorlagen.**

(57) Die Anordnung enthält einen mit einer optoelektronischen Abtasteinrichtung (AB) versehenen Wagen (W), der entlang von Abtastlinien (AL) über die Vorlage (V) bewegbar ist. Am Wagen (W) und an der Wagenführung (S, F1) sind Abtaster (A1, A2) angeordnet, die Strichmarkierungen auf zugeordneten Taktlinealen (TL1, TL2) abtasten und Signale erzeugen, die zur Kennzeichnung der Stellung des Wagens (W) bzw. der Wagenführung (S, F1) dienen.

**EP 0 038 070 A2**

SIEMENS AKTIENGESELLSCHAFT   Unser Zeichen
Berlin und München          VPA   80 P 0023 E

0038070

Anordnung zum Abtasten von mit graphischen Mustern versehenen Vorlagen.

Die Erfindung bezieht sich auf eine Anordnung zum Abtasten
von mit graphischen Mustern versehenen Vorlagen entlang
einer Mehrzahl von parallelen Abtastlinien, bei der eine
optoelektronische Abtasteinrichtung an einem Wagen befestigt ist, der entlang den Abtastlinien über die Vorlage
bewegbar ist.

Aus der DE-OS 25 18 370 ist eine derartige Anordnung bekannt, bei der eine optoelektronische Abtasteinrichtung
entlang von Abtastlinien über eine Vorlage geführt wird.
Die Vorlage wird bei dieser bekannten Anordnung unter Verwendung von Walzen senkrecht zu den Abtastlinien verschoben.

Es wäre denkbar, den Wagen entlang den Abtastlinien unter
Verwendung eines Schrittmotors zu bewegen. In diesem Fall
könnten den Positionen von Punkten auf den Abtastlinien
zugeordnete Signale aus den Ansteuersignalen für den
Schrittmotor abgeleitet werden. Da die Abtasteinrichtung
und ein zugehöriger Wagen eine verhältnismäßig große Masse
aufweisen, sind auch Schrittmotoren erforderlich, die große Ströme erfordern. Es wäre auch denkbar, den mit der
Abtasteinrichtung versehenen Wagen auch unter Verwendung
eines Gleichstrommotors zu bewegen. Zum Erzeugen von den
Positionen von Punkten längs der Abtastlinie zugeordneten
Signalen wäre es in diesem Fall möglich, an dem Gleichstrommotor eine Taktscheibe anzuordnen, die Strichmarkierungen enthält und diese Strichmarkierungen durch einen
Abtaster abzutasten. Falls der Wagen über ein Zugmittel,
beispielsweise einen Zahnriemen oder einen Seilzug durch

Ret 1 Ram /14.4.1980

den Gleichstrommotor bewegt wird, besteht die Gefahr, daß infolge von Elastizitäten oder Toleranzen eine eindeutige Zuordnung zwischen den Punkten längs den Abtastlinien und der Stellung des Wagens nicht gewährleistet ist.

Falls die Vorlage, wie bei der aus der DE-OS 25 18 370 bekannten Anordnung senkrecht zu den Abtastlinien durch Walzen verschoben wird, besteht ebenfalls die Gefahr, daß durch Schlupf eine eindeutige Zuordnung zwischen den Bildpunkten und einer Position der Vorlage senkrecht zu den Abtastlinien nicht gewährleistet ist.

Der Erfindung liegt daher die Aufgabe zugrunde, eine Anordnung zum Abtasten von mit graphischen Mustern versehenen Vorlagen anzugeben, bei der die Positionen von Bildpunkten mit großer Genauigkeit ermittelt werden können.

Erfindungsgemäß wird die Aufgabe bei der Anordnung der eingangs genannten Art dadurch gelöst, daß der Wagen an einer senkrecht zu den Abtastlinien bewegbaren Wagenführung verschiebbar angeordnet ist, daß an dem Wagen ein erster Abtaster angeordnet ist, der Strichmarkierungen auf einem an der Wagenführung angeordneten ersten Taktlineal abtastet, daß an der Wagenführung ein zweiter Abtaster angeordnet ist, der Strichmarkierungen an einem gestellfest angeordneten zweiten Taktlineal abtastet und daß die Abtaster den Strichmarkierungen auf den Taktlinealen zugeordnete Signale erzeugen.

Die Anordnung gemäß der Erfindung hat den Vorteil, daß durch die Verwendung der Taktlineale unabhängig von den Toleranzen und Elastizitäten der Antriebsmittel immer eine eindeutige Zuordnung zwischen den Bildpunkten der abzutastenden Vorlage und den erzeugten Signalen vorliegt. Die Vorlage wird dabei nicht bewegt, sondern während der Abtastung, beispielsweise unter Verwendung von Unterdruck festgehalten.

0038070

80 P 8023 E

Eine sehr schnelle Bewegung des Wagens und dennoch eine eindeutige Zuordnung der Bildpunkte längs der Abtastlinien zu der Stellung des Wagens wird dann erreicht, wenn der Wagen durch einen ersten Gleichstrommotor kontinuierlich bewegt wird und wenn die vom ersten Abtaster erzeugten Signale die Zuordnung zwischen der Stellung des Wagens und der Vorlage längs der Abtastlinien kennzeichnen.

Eine schnelle Abtastung der Vorlage wird auch dadurch erreicht, daß die Wagenführung durch einen zweiten Gleichstrommotor schrittweise bewegt wird und daß die vom zweiten Abtaster abgegebenen Signale zur Einregelung des zweiten Gleichstrommotors auf die durch die Strichmarkierungen vorgegebenen Abtastlinien dienen. Insbesondere ist es vorteilhaft, wenn die Gleichstrommotore als kollektorlose Gleichstrom-Servomotore ausgebildet sind.

Falls die Abtastung in unterschiedlichen Abtastrastern erfolgen kann, ist es zweckmäßig, wenn die Taktlineale austauschbar angeordnet sind.

Die Abtastung erfolgt auf einfache Weise, wenn die Abtaster als optoelektronische Abtaster ausgebildet sind.

Zur Steuerung der Gleichstrommotore kann es günstig sein, wenn die Taktlineale weitere Markierungen aufweisen, bei deren Abtastung durch die Abtaster die Gleichstrommotore gebremst werden und/oder ihre Drehrichtung umkehren.

Falls Vorlagen mit unterschiedlicher Größe und Lage der abzutastenden graphischen Muster abgetastet werden sollen, ist es günstig, wenn die Vorlagen durch mindestens einen justierbaren Anschlag in eine mit den Taktlinealen übereinstimmende Lage bringbar sind.

Im folgenden wird ein Ausführungsbeispiel der Anordnung gemäß der Erfindung anhand einer Zeichnung erläutert.

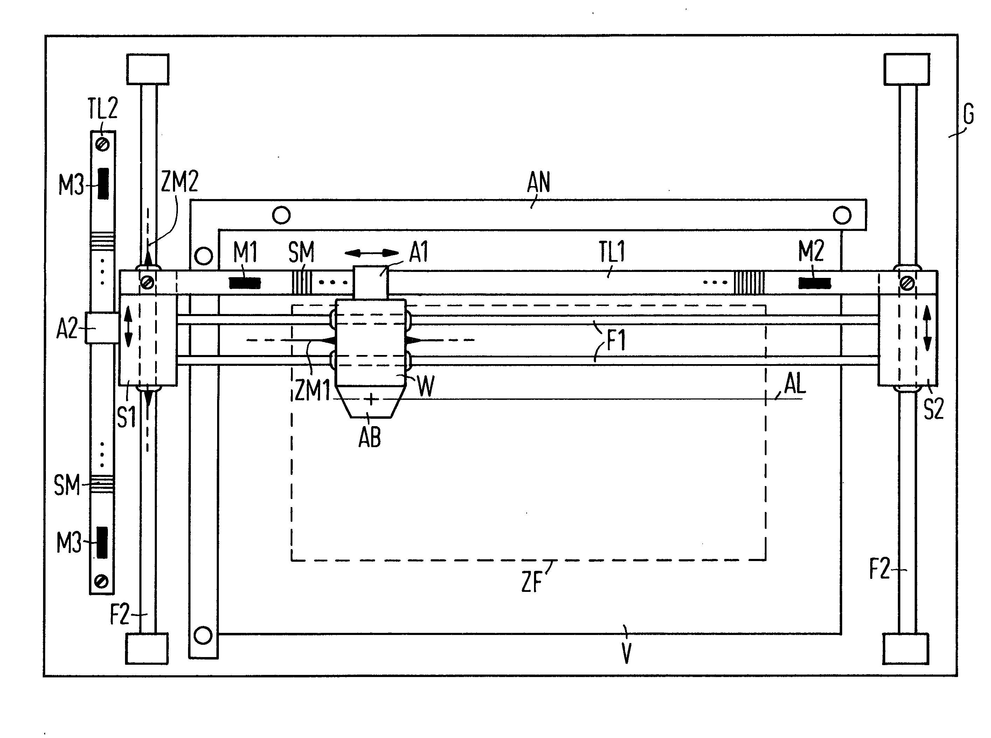

Die Figur zeigt die Draufsicht auf eine schematisch dargestellte Anordnung.

Bei der in der Figur dargestellten Anordnung ist eine Vorlage V unter Verwendung eines Anschlags AN, der einteilig ausgebildet sein kann, auf einer Grundplatte G aufgelegt. Die Vorlage V wird beispielsweise unter Verwendung von Unterdruck auf der Grundplatte G festgehalten. An einem Wagen W ist eine optoelektronische Abtasteinrichtung AB für auf der Vorlage V vorgesehene graphische Muster angeordnet. Die Abtasteinrichtung AB kann für eine einfarbige oder mehrfarbige Abtastung ausgelegt sein. Die graphischen Muster sind beispielsweise innerhalb eines gestrichelt dargestelllten Zeichenfelds ZF, das ein Strichraster aufweisen kann, dargestellt.

Der Wagen W ist an einer Wagenführung in horizontaler Richtung verschiebbar angeordnet. Die Wagenführung enthält zwei Führungsschienen F1 und zwei Seitenteile S1 und S2. Die Abtastung des graphischen Musters erfolgt entlang von Abtastlinien AL dadurch, daß der Wagen W durch ein angedeutetes Zugmittel ZM1, das beispielsweise als Seilzug ausgebildet ist, entlang den Führungsschienen F1 bewegt wird. Das Zugmittel ZM1 wird durch einen Gleichstrommotor, beispielsweise durch einen kollektorlosen Gleichstrom-Servomotor mit einem Tachogenerator bewegt. Der Gleichstrommotor ist beispielsweise unter dem Seitenteil S1 angeordnet. Aus Gründen der Übersichtlichkeit wurde auf eine Darstellung des Gleichstrommotors verzichtet.

Da die Vorlage V auf der Grundplatte G nicht verschiebbar angeordnet ist, muß der Wagen W nach jedem Abtasten einer Abtastlinie AL senkrecht zu dieser zur nächsten Abtastlinie verschoben werden. Zu diesem Zweck ist die Wagenführung auf zwei Führungsschienen F2 in vertikaler Richtung verschiebbar angeordnet. Die Verschiebung erfolgt über ein angedeutetes Zugmittel ZM2, das ebenfalls als Seilzug

0038070

ausgebildet sein kann. Das Zugmittel ZM2 wird ebenfalls durch einen Gleichstrommotor, beispielsweise einen kollektorlosen Gleichstrom-Servomotor angetrieben. Während der Wagen W durch den Gleichstrommotor kontinuierlich bewegt werden kann, wird die Wagenführung schrittweise von Abtastlinie zu Abtastlinie bewegt.

Um eine genaue Zuordnung der abgetasteten Bildpunkte auf der Vorlage V zu den jeweiligen Positionen der optoelektronischen Abtasteinrichtung AB zu erhalten, sind an dem Wagen W und an der Wagenführung am Seitenteil S1 Abtaster A1 bzw. A2 angeordnet, die vorzugsweise als optoelektronische Abtaster ausgebildet sind. Die Abtaster A1 und A2 tasten Strichmarkierungen SM auf zwei Taktlinealen TL1 und TL2 ab. Das Taktlineal TL1 ist an der Wagenführung angeordnet, während das Taktlineal TL2 gestellfest angeordnet ist.

Bei der Bewegung des Wagens in horizontaler Richtung entlang der Abtastlinie AL erzeugt der Abtaster A1 bei jeder Abtastung einer Strichmarkierung ein Signal, das die Zuordnung zwischen der Stellung des Wagens und des gerade abgetasteten Bildpunkts der Vorlage kennzeichnet. Dieses Signal wird einer nicht dargestellten Auswerteschaltung zugeführt. Diese Signale können zum Taktieren der von der Abtasteinrichtung AB abgegebenen Abtastsignale verwendet werden. In ähnlicher Weise tastet der Abtaster A2 bei der Bewegung der Wagenführung die Strichmarkierungen SM auf dem Taktlineal TL2 ab, um die Bewegung der Wagenführung in vertikaler Richtung zu steuern. Die Abtasteinrichtung A2 kann dabei den Teil eines Regelkreises bilden, der die Wagenführung auf jeweils eine durch die Strichmarkierung vorgegebene Stellung einregelt.

Falls die Vorlage in einem vorgegebenen Raster abgetastet werden soll, wird dieses Raster in Übereinstimmung mit den Strichmarkierungen auf den Taktlinealen TL1 und TL2 gebracht. Zu diesem Zweck kann einerseits der Anschlag AN dienen, der justierbar ausgebildet ist. Andererseits können auch die Taktlineale TL1 und TL2 justierbar angeordnet sein. Um auch Vorlagen mit unterschiedlichen Taktrastern abtasten zu können, ist es von Vorteil, wenn die Taktlineale TL1 und TL2 austauschbar angeordnet sind. Bei einer Änderung des Abtastrasters müssen dann nur die entsprechenden Taktlineale TL1 und TL2 vorgesehen werden.

Zur Steuerung der Gleichstrommotore können auch auf den Taktlinealen TL1 und TL2 weitere Markierungen M1 bis M4 vorgesehen werden, bei deren Abtastung die Gleichstrommotore gebremst werden oder ihre Drehrichtung umkehren.

8 Patentansprüche
1 Figur

0038070

80 P 8 0 2 3 E

Patentansprüche

1. Anordnung zum Abtasten von mit graphischen Mustern versehenen Vorlagen entlang einer Mehrzahl von parallelen Abtastlinien, bei der eine optoelektronische Abtasteinrichtung an einem Wagen befestigt ist, der entlang den Abtastlinien über die Vorlage bewegbar ist, d a d u r c h g e k e n n z i c h n e t, daß der Wagen (W) an einer senkrecht zu den Abtastlinien (AL) bewegbaren Wagenführung (F1, S) verschiebbar angeordnet ist, daß an dem Wagen (W) ein erster Abtaster (A1) angeordnet ist, der Strichmarkierungen (SM) auf einem an der Wagenführung (F1, S) angeordneten ersten Taktlineal (TL1) abtastet, daß an der Wagenführung (F1, S) ein zweiter Abtaster (A2) angeordnet ist, der Strichmarkierungen (SM) an einem gestellfest angeordneten zweiten Taktlineal (TL2) abtastet und daß die Abtaster (A1, A2) den Strichmarkierungen (SM) zugeordnete Signale erzeugen.

2. Anordnung nach Anspruch 1, d a d u r c h g e - k e n n z e i c h n e t, daß der Wagen (W) durch einen ersten Gleichstrommotor kontinuierlich bewegt wird und daß die vom ersten Abtaster (A1) erzeugten Signale die Zuordnung zwischen der Stellung des Wagens (W) und der Vorlage (V) längs der Abtastlinien (AL) kennzeichnen.

3. Anordnung nach Anspruch 1 oder Anpsruch 2, d a - d u r c h g e k e n n z e i c h n e t, daß die Wagenführung (F1, S) durch einen zweiten Gleichstrommotor sc schrittweise bewegt wird und daß die vom zweiten Abtaster (A2) abgegebenen Signale zur Einregelung des zweiten Gleichstrommotors auf die durch die Strichmarkierungen (SM) vorgegebenen Abtastlinien (AL) dienen.

4. Anordnung nach einem der Ansprüche 1 bis 3, d a - d u r c h g e k e n n z e i c h n e t, daß die Gleichstrommotore als kollektorlose Servomotore ausgebildet sind.

5. Anordnung nach einem der Ansprüche 1 bis 4, d a - d u r c h   g e k e n n z e i c h n e t , daß die Taktlineale (TL1, TL2) austauschbar angeordnet sind.

6. Anordnung nach einem der Ansprüche 1 bis 5, d a - d u r c h   g e k e n n z e i c h n e t , daß die Abtaster (A1, A2) als optoelektronische Abtaster ausgebildet sind.

7. Anordnung nach einem der Ansprüche 1 bis 6, d a - d u r c h   g e k e n n z e i c h n e t , daß die Takt- linieale (TL1, TL2) weitere Markierungen (M1 bis M4) aufweisen, bei deren Abtastung durch die Abtastelemente (A1, A2) die Gleichstrommotore gebremst werden und/oder ihre Drehrichtung umkehren.

8. Anordnung nach einem der vorangehenden Ansprüche, d a - d u r c h   g e k e n n z e i c h n e t , daß die Vorla- gen (V) durch mindestens einen justierbaren Anschlag (AN) in eine mit den Taktlinealen (TL1, TL2) übereinstimme de Lage bringbar sind.